# EUROPÄISCHE PATENTSCHRIFT

(11) **EP 2 765 101 B1**
(45) Veröffentlichungstag und Bekanntmachung des Hinweises auf die Patenterteilung: **14.10.2015**
(21) Anmeldenummer: 14154229.0
(22) Anmeldetag: 07.02.2014
(51) Int. Cl.: B65G 67/20

(54) **Selbstfahrender Transportwagen für Paletten**
Self-propelled transport trolley for pallets
Chariot de transport automoteur pour palettes

(30) Priorität: 08.02.2013 DE 102013202098
(43) Veröffentlichungstag der Anmeldung: 13.08.2014
(73) Patentinhaber: Alfred Arnold eingetragener Kaufmann Verladesysteme, 70439 Stuttgart (DE)
(72) Erfinder:
(74) Vertreter: Patentanwälte Ruff, Wilhelm, Beier, Dauster & Partner mbB

(56) Entgegenhaltungen:
- EP-A1- 1 967 484
- EP-A1- 2 008 950
- EP-A1- 2 100 831
- WO-A1-03/068659
- GB-A- 128 377

## Beschreibung

Die Erfindung betrifft einen selbstfahrenden Transportwagen für Paletten, wobei der Transportwagen einen Fahrantrieb, einen Rahmen, eine Tragschiene und einen Hubmechanismus zum Anheben und Absenken der Tragschiene relativ zu dem Rahmen aufweist, wobei der Transportwagen ausgebildet ist, eine zur Fahrbahn hin offene Durchgangsöffnung zwischen einer auf der Fahrbahn stehenden Palette und der Fahrbahn in zwei entgegengesetzten Richtungen vollständig zu durchfahren.

Ein gattungsgemäßer selbstfahrender Transportwagen ist aus der deutschen Offenlegungsschrift DE 10 2008 014 877 A1 bekannt.

Aus der europäischen Offenlegungsschrift EP 1 967 484 A1 ist ein selbst fuhrender Transportwagen gemäß dem Oberbegriff des Anspruchs 1 bekannt. EP 1 967 484 A1 offenbart eine Kette aus mehreren selbstfahrenden Transportwagen, die mit in ihrer Länge veränderlichen beweglichen Gliedern miteinander verbunden sind. Die einzelnen Transportwagen weisen einen Fahrantrieb, einen Rahmen, eine Tragschiene und einen Hubmechanismus zum Anheben und Absenken der Tragschiene relativ zu dem Rahmen auf. Die einzelnen Transportwagen sind dazu ausgebildet, eine zur Fahrbahn hin offene Durchgangsöffnung zwischen einer auf der Fahrbahn stehenden Palette und der Fahrbahn in zwei entgegengesetzten Richtungen vollständig zu durchfahren. Die zusammen ein Band bildenden Transportwagen stehen aber mit einem mobilen Zug- und Speicherfahrzeug in Verbindung, in das sie bei Nichtgebrauch eingefahren werden können. Jeder einzelne Transportwagen weist eine Tragschiene und einen Teilrahmen auf. Jeder Teilrahmen ist mit wenigstens zwei Rollen, einem Fahrantrieb für wenigstens eine der Rollen und einem Hubmechanismus versehen.

Mit der Erfindung soll ein verbesserter selbstfahrender Transportwagen für Paletten bereitgestellt werden.

Erfindungsgemäß ist hierzu ein selbstfahrender Transportwagen für Paletten nach Anspruch 1 vorgesehen. Der Transportwagen weist einen Fahrantrieb, einen Rahmen, eine Tragschiene und einen Hubmechanismus zum Anheben und Absenken der Tragschiene relativ zu dem Rahmen auf, wobei der Transportwagen ausgebildet ist, eine zur Fahrbahn hin offene Durchgangsöffnung zwischen einer auf der Fahrbahn stehenden Palette und der Fahrbahn in zwei entgegengesetzten Richtungen vollständig zu durchfahren, bei dem der Rahmen zwei relativ zueinander bewegliche Teilrahmen aufweist, die jeweils mit wenigstens zwei Rollen, einem Fahrantrieb für die Rollen und einem Hubmechanismus versehen sind und bei dem jeder Hubmechanismus einen ersten Hebel aufweist, der einerseits um eine quer zur Längsachse des Transportwagens liegende Drehachse schwenkbar aber nicht parallel zur Längsachse verschiebbar an dem Teilrahmen und andererseits um eine quer zur Längsachse liegende Drehachse schwenkbar aber nicht parallel zur Längsachse verschiebbar an der Tragschiene angeordnet ist, und weiter jeder Hubmechanismus einen zweiten Hebel aufweist, der einerseits um eine quer zur Längsachse des Transportwagens liegende Drehachse schwenkbar, aber nicht parallel zur Längsachse verschiebbar an dem Teilrahmen und andererseits um eine quer zur Längsachse liegende Drehachse schwenkbar und parallel zur Längsachse verschiebbar an der Tragschiene angeordnet ist.

Durch diese Maßnahmen kann der selbstfahrende Transportwagen aus einer durchgehenden Tragschiene und den wenigstens zwei relativ zueinander beweglichen Teilrahmen bestehen, so dass mit Ausnahme der über die gesamte Länge des Transportwagens durchgehenden Tragschiene nur vergleichsweise kompakte Bauteile des Transportwagens vorzusehen sind. Dies ermöglicht den modularen Aufbau des erfindungsgemäßen Transportwagens, wodurch die Herstellbarkeit, die Wartung und Instandsetzung sowie auch die Serienproduktion des Transportwagens erheblich erleichtert werden.

Durch eine solche Anordnung zweier Hebel einerseits am Rahmen und andererseits an der Tragschiene wird eine sehr belastbare und darüber hinaus platzsparende Hebelanordnung bereitgestellt. Speziell kann der erste Hebel lediglich schwenkbar bzw. drehbar am Teilrahmen und an der Tragschiene angeordnet werden und auch der zweite Hebel kann lediglich schwenkbar an dem Teilrahmen angeordnet werden. Es genügt die verschiebbare Anordnung des zweiten Hebels an der Tragschiene, um einen Hubmechanismus bereitzustellen. Zweckmäßigerweise werden die beiden Hebel möglichst tief am Teilrahmen und möglichst hoch an der Tragschiene angelenkt, um günstige Hebelverhältnisse bereitzustellen.

In Weiterbildung der Erfindung sind die Teilrahmen symmetrisch zu einer senkrecht zur Längsachse des Transportwagens angeordneten Mittelebene angeordnet.

Auf diese Weise können die Teilrahmen identisch zueinander ausgebildet werden und die Anzahl unterschiedlicher Komponenten des Transportwagens wird verringert. Da die Teilrahmen relativ zueinander beweglich sind, kann die Tragschiene mittels Hebelanordnungen angehoben werden. Die Tragschiene selbst verändert ihre Länge dabei selbstverständlich nicht, ein Abstand zwischen den zwei Teilrahmen verringert oder vergrößert sich aber beim Anheben. Dies ist aufgrund der Rollen an den Teilrahmen, mit denen der Transportwagen auf der Fahrbahn aufsteht, problemlos möglich.

In Weiterbildung der Erfindung ist ein Antrieb des Hubmechanismus an der Tragschiene angeordnet und greift an dem zweiten Hebel an.

Auf diese Weise kann eine platzsparende Anordnung erzielt werden und der Antrieb des Hubmechanismus wird zusammen mit der Tragschiene angehoben. Dies ermöglicht es auch, den Antrieb für den Hubmechanismus an einem Deckel in der Tragschiene anzuordnen, so dass dieser von der Oberseite der Tragschiene her abgeschraubt und eventuell ausgetauscht werden kann, ohne den kompletten Transportwagen umdrehen oder auf die Seite legen zu müssen. Aufgrund des erheblichen Gewichts der erfindungsgemäßen Transportwagen ist dies von großem Vorteil, da auf diese Weise für die Wartung des Antriebs des Hubmechanismus keine spezielle Wendeeinrichtung für den Transportwagen benötigt wird.

In Weiterbildung der Erfindung greift der Antrieb des Hubmechanismus im Bereich der verschiebbaren Lagerung des zweiten Hebels an der Tragschiene an diesem an und bewirkt eine Verschiebung des an der Tragschiene gelagerten Endes des zweiten Hebels in und entgegen der Längsrichtung.

Eine solche Verschiebebewegung kann platzsparend realisiert werden und auch mit sehr kleinen Antriebsaggregaten kann eine sehr große Antriebskraft in Längsrichtung erzeugt werden.

In Weiterbildung der Erfindung ist der zweite Hebel an der Tragschiene mittels eines in Längsrichtung der Tragschiene verschiebbaren Schlittens befestigt.

Auf diese Weise kann eine platzsparende, verschiebbare Lagerung realisiert werden, die für die Übertragung von großen Kräften geeignet ist.

Vorteilhafterweise ist der Schlitten mittels einer Gewindespindel antreibbar.

Vorteilhafterweise weist der Schlitten eine Gewindebohrung auf, in der die Gewindespindel abschnittsweise aufgenommen ist.

Vorteilhafterweise ist die Gewindespindel parallel zur Längsrichtung des Transportwagens angeordnet.

Die vorstehend beschriebenen Maßnahmen können einzeln oder zusammen verwirklicht werden und ermöglichen eine sehr platzsparende und zuverlässige Ausbildung des Hubmechanismus. Gewindespindeln sind für die Übertragung extrem großer Kräfte geeignet und benötigen dabei, je nach Steigung, nur eine vergleichsweise geringe rotatorische Antriebskraft. Das Antriebsaggregat, insbesondere ein Elektromotor des Hubmechanismus kann dadurch sehr klein ausgebildet werden.

In Weiterbildung der Erfindung sind die Lagerung des ersten Hebels an der Tragschiene, die Lagerung des zweiten Hebels an der Tragschiene und ein Antrieb für den Hubmechanismus an einem Hubmodulabschnitt der Tragschiene befestigt, wobei der Hubmodulabschnitt als separates Bauteil ausgebildet ist und von der übrigen Tragschiene getrennt werden kann.

Auf diese Weise wird der Austausch bzw. die Wartung des Hubmechanismus erheblich erleichtert. Zum Austausch des Hubmechanismus kann der Hubmodulabschnitt von der Tragschiene getrennt werden.

In Weiterbildung der Erfindung ist der Hubmodulabschnitt der Tragschiene als Deckelplatte ausgebildet und lösbar mit der übrigen Tragschiene verbunden. Vorteilhafterweise ist die Deckelplatte an einer Oberseite der Tragschiene angeordnet und es sind Mittel zum Verbinden von Tragschiene und Deckelplatte von einer Oberseite der Tragschiene oder von den Seiten der Tragschiene her zugänglich und lösbar.

Durch diese Maßnahmen kann die Deckelplatte in Normallage des Transportwagens, also wenn dieser mit seinen Rollen auf einer Fahrbahn steht, gelöst werden. Die Deckelplatte kann dann beispielsweise nach oben, von der Tragschiene abgehoben werden. Der Transportwagen muss für den Austausch oder die Wartung des Hubmoduls damit nicht gedreht werden, sondern kann in seiner Normallage verbleiben. Da die Transportwagen ein erhebliches Gewicht aufweisen und beispielsweise für den Transport von drei hintereinander angeordneten Paletten geeignet sind, wird dadurch die praktische Handhabung der erfindungsgemäßen Transportwagen erheblich erleichtert.

In Weiterbildung der Erfindung weist jeder Teilrahmen eine Lenkachse und einen Lenkantrieb auf.

Auf diese Weise kann der modulare Aufbau der Transportwagen beibehalten werden. Die Lenkmechanismen in jedem Teilrahmen können dabei einzeln oder gemeinsam angesteuert werden. Soll beispielsweise ein enger Kurvenradius gefahren werden, können die Lenkantriebe gegensätzlich angesteuert werden. Soll der Transportwagen parallel versetzt werden, können beide Lenkantriebe gleichsinnig angesteuert werden.

In Weiterbildung der Erfindung weist jeder Teilrahmen einen Fahrantrieb auf.

Auf diese Weise kann der modulare Aufbau der erfindungsgemäßen Transportwagen realisiert werden und die Anzahl unterschiedlicher Komponenten, die für die Transportwagen benötigt werden, wird erheblich verringert.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten Ausführungsformen können dabei in beliebiger Weise miteinander kombiniert werden, ohne den Rahmen der Ansprüche zu überschreiten. In den Zeichnungen zeigen:
- Fig. 1: eine teilweise geschnittene Seitenansicht eines erfindungsgemäßen Transportwagens,
- Fig. 2: eine Draufsicht auf die Schnittebene II-II der Fig. 1, entsprechend einer Draufsicht auf den Transportwagen der Fig. 1 bei nicht dargestellter Deckplatte der Tragschiene,
- Fig. 3: eine vergrößerte Teilansicht des linken Bereichs der Fig. 2,
- Fig. 4: eine vergrößerte Teilansicht des rechten Bereichs der Fig. 2,
- Fig. 5: eine vergrößerte Teilansicht des linken Bereichs der Fig. 1,
- Fig. 6: eine vergrößerte Teilansicht des rechten Bereichs der Fig. 1,
- Fig. 7: eine teilweise geschnittene Seitenansicht des Transportwagens der Fig. 1 im abgesenkten Zustand der Tragschiene,
- Fig. 8: eine abschnittsweise geschnittene Teilansicht des Transportwagens der Fig. 1 im angehobenen Zustand der Tragschiene,
- Fig. 9: eine Ansicht des Hubmechanismus des Transportwagens der Fig. 1 im abgesenkten Zustand der Tragschiene,
- Fig. 10: eine Ansicht des Hubmechanismus des Transportwagens der Fig. 1 von schräg unten im angehobenen Zustand,
- Fig. 11: eine auseinandergezogene, teilweise Darstellung der Tragschiene des Transportwagens der Fig. 1,
- Fig. 12: eine Draufsicht auf die Tragschiene der Fig. 11,
- Fig. 13: eine Ansicht der Tragschiene der Fig. 11 von schräg oben,
- Fig. 14: eine Vorderansicht der Tragschiene der Fig. 11,
- Fig. 15: eine abschnittsweise Ansicht eines Teilrahmens des Transportwagens der Fig. 1 von schräg oben mit einem Lenkmechanismus,
- Fig. 16: den Lenkmechanismus der Fig. 15 in einer Seitenansicht und
- Fig. 17: den Lenkmechanismus der Fig. 15 in einer Draufsicht.

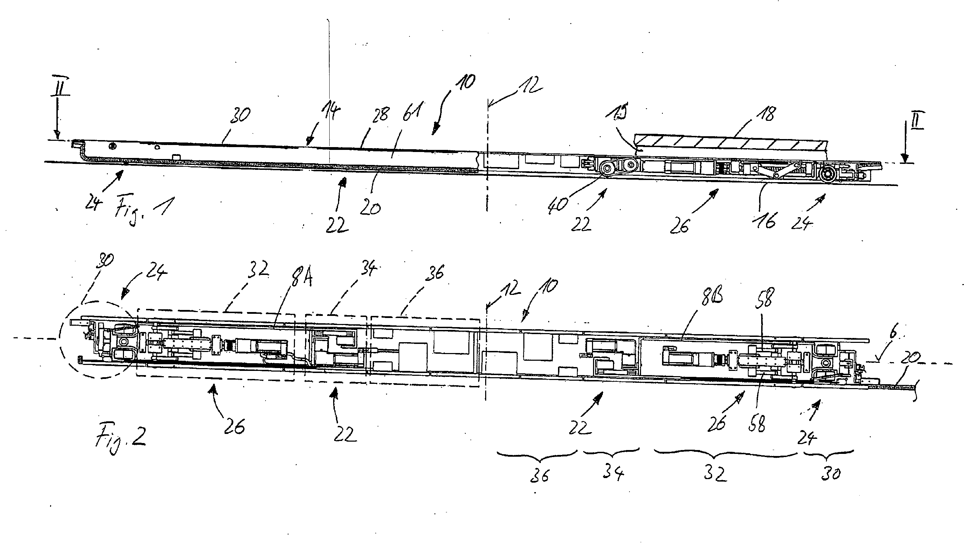

Die Darstellung der Fig. 1 zeigt in einer teilweise geschnittenen Seitenansicht einen erfindungsgemäßen selbstfahrenden Transportwagen 10 für Paletten. Auf der in Fig. 1 links einer Quermittelebene 12 dargestellten Seite ist die vollständige Seitenansicht des Transportwagens 10 dargestellt. Auf der in Fig. 1 rechts der Quermittelebene 12 dargestellten Seite ist die dem Betrachter zugewandte Seitenwand einer Tragschiene 14 weggeschnitten, um die mechanischen Komponenten des Transportwagens 10 darstellen zu können.

Der Transportwagen 10 ist in Fig. 1 im abgesenkten Zustand dargestellt. Der Transportwagen 10 kann auf einer Fahrbahn 16 fahren. Der Transportwagen 10 ist in diesem abgesenkten Zustand niedriger als eine Durchgangsöffnung 19 in einer Palette 18, beispielsweise einer Euro-Palette, die in Fig. 1 lediglich abschnittsweise und schematisch angedeutet ist. Die Durchgangsöffnung 19 ist zwischen einer platten- oder rostartigen Oberseite der Palette 18 und der Fahrbahn 16 definiert. Die Durchgangsöffnung 19 geht über die gesamte Länge der Palette durch und in der Regel sind zwei solcher Durchgangsöffnungen 19 parallel nebeneinander angeordnet. Mittels zwei der Transportwagen 10, die jeweils in eine der Durchgangsöffnungen 19 einfahren, kann die Palette 18 dann nach dem Anheben der jeweiligen Tragschienen 14 zusammen mit den beiden Transportwagen 10 verfahren werden. Die Besonderheit der erfindungsgemäßen Transportwagen 10 liegt dabei darin, dass diese die Durchgangsöffnungen 19 in der Palette 18 in beiden Richtungen vollständig durchfahren können, wenn sie sich jeweils im abgesenkten Zustand befinden. Die Palette 18 oder auch mehrere Paletten 18 können daher an einer Ladestelle aufgenommen werden, indem die Transportwagen 10 beispielsweise in Fig. 1 von links unter die Palette 18 in deren Durchgangsöffnung 19 fahren und diese dann anheben. Die Palette 18 kann dann mit den Transportwagen 10 im Wesentlichen entlang eines geradlinigen Pfades auf eine nicht dargestellte Ladefläche eines LKWs gefahren und dort abgesetzt werden, wobei die Ladefläche beispielsweise in der Fig. 1 links liegt. Die Transportwagen 10 können dann in Fig. 1 nach rechts wieder aus den Durchgangsöffnungen 19 der Palette 18 herausfahren. Zum Transportieren der Palette 18 oder mehrere Paletten 18 ist dadurch kein Wendemanöver der Transportwagen 10 erforderlich.

Die Transportwagen 10 sind auch nicht mit einem Zugfahrzeug oder dergleichen verbunden sondern jeweils selbstfahrend ausgebildet. Lediglich ein Zuleitungskabel 20 ist vorgesehen, das hinter dem Transportwagen 10 hergezogen wird und dann auf der Fahrbahn 16 aufliegt.

Der Transportwagen 10 weist eine Länge auf, die auf die Länge von drei hintereinander angeordneten Paletten 18 abgestimmt ist. Mit zwei der Transportwagen 10 können dadurch bis zu drei hintereinander stehende Paletten 18 gleichzeitig angehoben und transportiert werden, vorausgesetzt, dass die Durchgangsöffnungen 19 der Paletten 18 im Wesentlichen fluchtend zueinander angeordnet sind. Es können aber auch nur eine oder zwei Paletten transportiert werden.

Der Transportwagen 10 ist mit zwei Fahrantrieben 22, zwei Lenkachsen 24 und zwei Hubmechanismen 26 versehen, wobei in der Darstellung der Fig. 1 lediglich die in der rechten Hälfte des Transportwagens 10 dargestellten Komponenten zu erkennen sind.

Die Draufsicht der Fig. 2 zeigt den Transportwagen 10, wobei Deckelplatten 28, 30 und Querstege der Tragschiene 14 nicht dargestellt sind, um einen Blick auf die mechanischen Komponenten der Tragschiene 10 zu ermöglichen. Eine Längsachse 6 des Transportwagens 10 ist gestrichelt eingezeichnet.

In Fig. 2 zu erkennen sind die beiden Hubmechanismen 26, die beiden Lenkachsen 24 und die beiden Fahrantriebe 22 der Tragschiene 10. Der Fahrantrieb 22, die Lenkachsen 24 und die Hubmechanismen 26 sind im Wesentlichen symmetrisch zur Quermittelebene 12 angeordnet, wobei keine strenge Symmetrie realisiert ist. Beispielsweise sind die Fahrantriebe 22 punktsymmetrisch zueinander angeordnet.

Der Transportwagen 10 weist einen modularen Aufbau auf und in der Darstellung der Fig. 2 sind in der linken Hälfte des Transportwagens 10 die einzelnen Module mit gestrichelten Linien angedeutet. Vom linken Ende in Fig. 2 beginnend ist zunächst ein Lenkmodul 30 vorgesehen, das die linke Lenkachse 24 aufweist. Darauf folgt ein Hubmodul 32, das den linken Hubmechanismus 26 aufweist. Auf das Hubmodul 32 folgt ein Fahrantriebsmodul 34 mit dem Fahrantrieb 22. Auf das Fahrantriebsmodul 34 folgt schließlich ein Elektronikmodul 36, das die Elektronikkomponenten für die Ansteuerung des Lenkmoduls 30, des Hubmoduls 32, des Fahrantriebmoduls 34 enthält. In dem Elektronikmodul werden auch die Signale von in Fig. 1 und Fig. 2 nicht dargestellten Sensoren verarbeitet, beispielsweise Abstandssensoren, um einen Abstand des Transportwagens 10 zu einem parallel fahrenden Transportwagen oder auch zu der Seitenwand eines LKWs überwachen zu können.

Auf der in Fig. 2 rechts dargestellten Seite der Quermittelebene 12 folgen dann entsprechend wieder ein Elektronikmodul 36, ein Fahrantriebsmodul 34, ein Hubmodul 32 und ein Lenkmodul 30, angedeutet jeweils durch geschweifte Klammern.

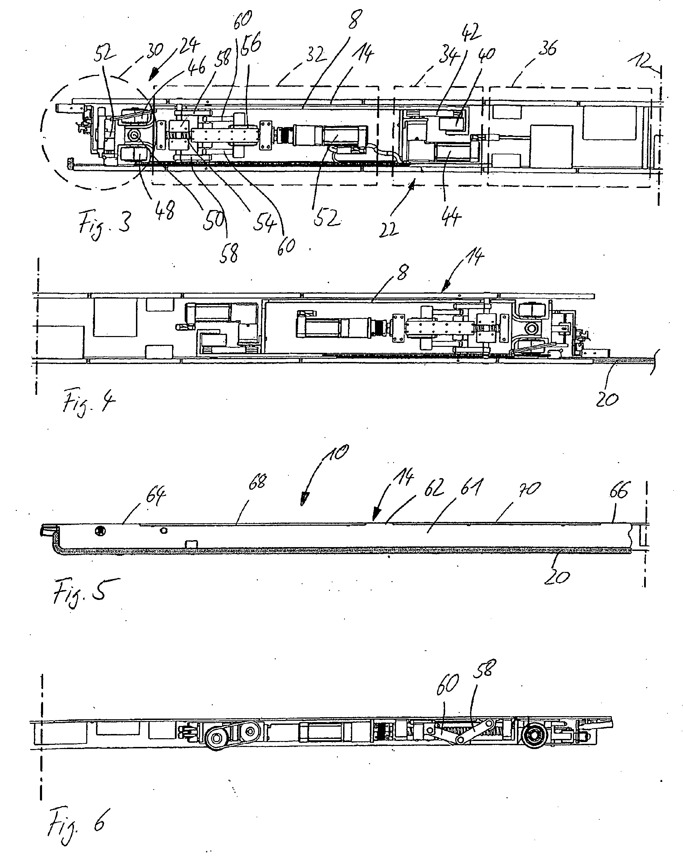

Fig. 3 zeigt die linke Hälfte der Fig. 2 in vergrößerter Darstellung. Der Fahrantrieb 22 im Fahrantriebsmodul 34 weist eine Rolle 40 auf, die auf der Fahrbahn 16 aufsteht, siehe auch Fig. 1. Die Rolle 40 wird mittels eines Keilriemens 42 über einen Getriebemotor 44 angetrieben. Eine Abtriebswelle des Getriebemotors 44 ist dabei parallel zu einer Längsachse des Transportwagens 10 angeordnet und mittels des Getriebes wird die Welle um 90° umgelenkt. Dadurch wird eine sehr platzsparende Anordnung realisiert. Die Rolle 40 kann federnd angeordnet sein.

Das Lenkmodul 30 weist die Lenkachse 24 mit zwei Rollen 46, 48 auf. Die beiden Rollen 46, 48 sind auf einer starren Achse angeordnet, die um eine Drehachse 50 verdreht werden kann. Es handelt sich somit um eine Drehschemellenkung 50, die einen sehr einfachen und hochbelastbaren Aufbau bereitstellt.

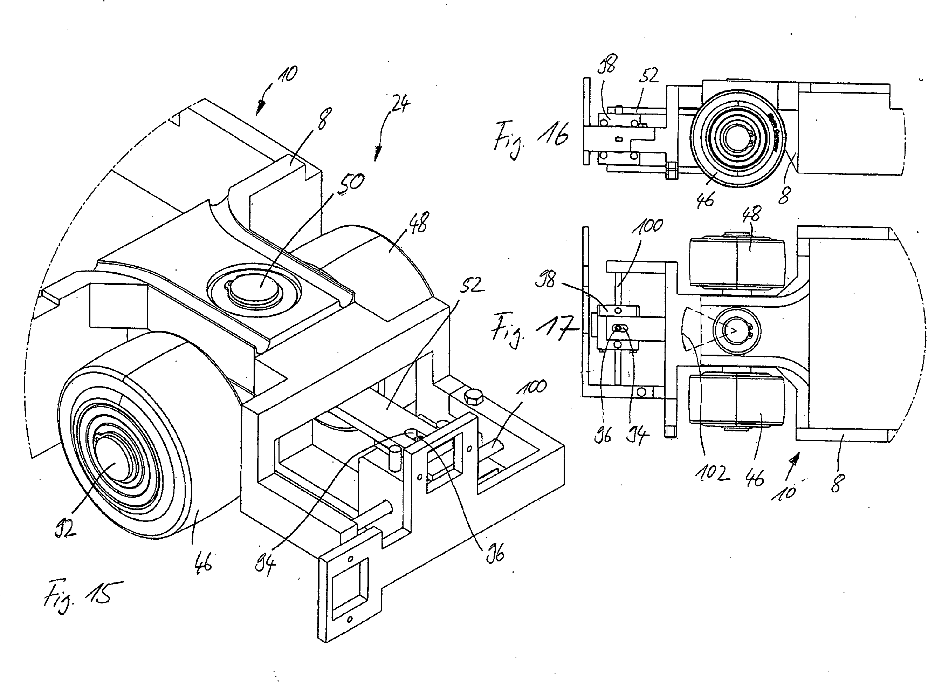

Die starre Achse mit den Rollen 46, 48 ist mit einem Lenkhebel 52 verbunden, der mittels eines auf einer quer zur Längsachse verfahrenden Lenkmotors ausgelenkt wird. Das Lenkmodul 30 wird anhand der Fig. 15, 16 und 17 noch detailliert erläutert.

Das Hubmodul 32 weist einen elektrischen Antriebsmotor 52 auf, der mit einer Gewindespindel 54 verbunden ist, die wiederum in einem Schlitten 56 gelagert ist. Über eine Drehung der Gewindespindel wird der Schlitten 56 in der Darstellung der Fig. 3 nach rechts bzw. links bewegt.

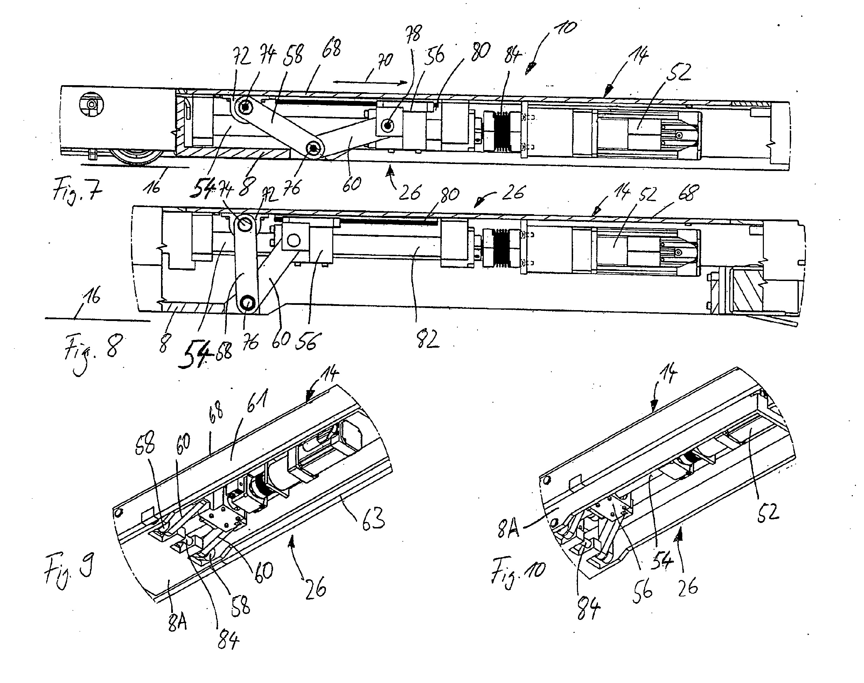

Dadurch verändern zwei erste Hebel 58 und zwei zweite Hebel 60 ihre Winkellage zueinander, wodurch die Tragschiene 14 dann angehoben bzw. abgesenkt wird. Das Hubmodul 32 wird noch detailliert anhand der Fig. 7 bis 10 erläutert.

Die Darstellung der Fig. 4 zeigt die rechte Hälfte vergrößert.

In der Darstellung der Fig. 4 ist das Zuleitungskabel 20 zu erkennen, das unterhalb einer Seitenplatte 61 der Tragschiene 14 entlanggeführt wird. Die Seitenplatte 61 der Tragschiene 14 ist dabei so ausgebildet, dass ihre Unterkante einen ausreichend großen Abstand zur Fahrbahn 16 aufweist, um das Kabel 20 nicht einzuquetschen, siehe auch Fig. 5. Das Kabel 20 ist an der Unterkante der Seitenplatte 60 nicht befestigt. Beispielsweise wird das Kabel 20 durch eine Öffnung in der Fahrbahn 16 nach unten weggeführt und wenn der Transportwagen diese Öffnung überrollt, verschwindet das Kabel 20 annähernd vollständig in dieser Öffnung und damit unterhalb der Fahrbahn. Setzt der Transportwagen 10 seine Fahrt dann weiter fort, in der Darstellung der Fig. 1 und der Fig. 5 beispielsweise nach rechts, wird das Kabel 20 dann wieder aus der Öffnung herausgezogen, wenn das in Fig. 5 linke Ende des Transportwagens 10 die Öffnung passiert hat.

Wird die Öffnung dann wieder in der Gegenrichtung überrollt, legt sich das Kabel 20 wieder parallel zur Unterkante der Seitenplatte 61 der Tragschiene 14 an, wie in Fig. 5 dargestellt ist. Nicht dargestellte Kabelabweiser sind vorgesehen, um zu verhindern, dass das Kabel 20 überrollt wird.

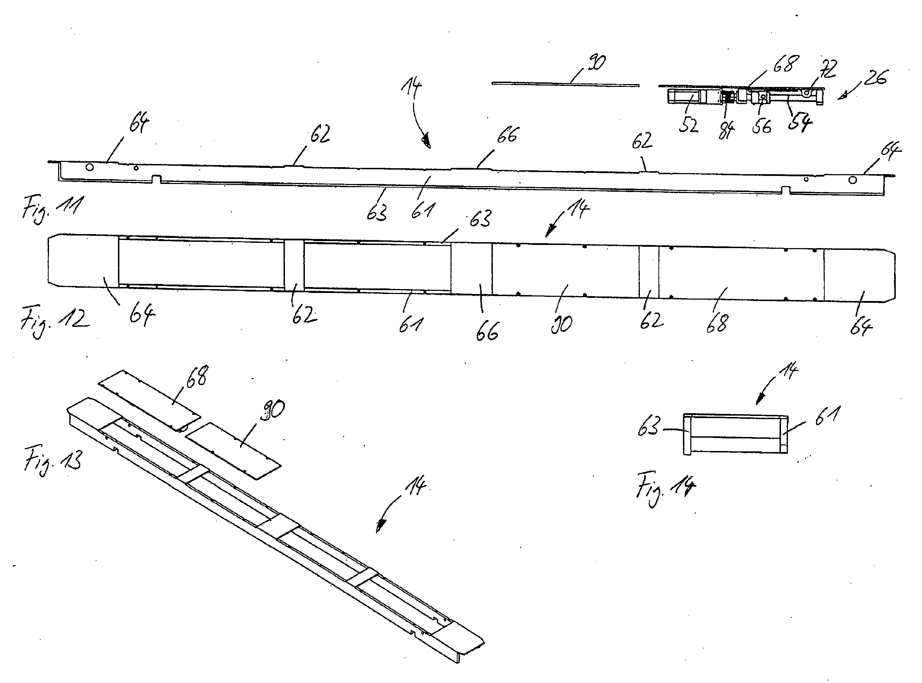

In der Darstellung der Fig. 5 ist zu erkennen, dass die Tragschiene 14 Querstege 62, 64 und 66 aufweist. Zwischen den Querstegen 62 und 64 bzw. 62 und 66 sind jeweils Deckelplatten 68 bzw. 70 angeordnet. Der Aufbau der Tragschiene 14 wird detailliert noch anhand der Fig. 11 bis 14 erläutert.

Die Darstellung der Fig. 7 zeigt den Hubmechanismus 26 im abgesenkten Zustand, entsprechend dem Zustand der Fig. 1. Die Tragschiene 14 ist mittels zweier erster Hebel 58, vergleiche Fig. 2, Fig. 3, mit dem Teilrahmen 8 verbunden, an dem wiederum die Lenkachse 24 und der Fahrantrieb 22 angeordnet sind. Der Schlitten 56 ist in Längsrichtung des Transportwagens 10 verschiebbar, wie anhand eines Doppelpfeils 70 angedeutet ist. Der Schlitten 56 ist mittels zweier zweiter Hebel 60 ebenfalls mit dem Teilrahmen 8 verbunden. Die beiden ersten Hebel 58 sind parallel zueinander angeordnet, vergleiche Fig. 2, Fig. 3, und mittels eines Lagerbocks 72 schwenkbar mit der Deckelplatte 68 der Tragschiene 14 verbunden. Der Lagerbock 72 erlaubt dabei eine Schwenkbewegung der ersten Hebel 58 um eine quer zur Längsrichtung liegende Drehachse 74, er erlaubt aber keine Verschiebung der ersten Hebel 58 relativ zur Tragschiene 14.

Die ersten Hebel 58 sind auch am Teilrahmen 8 lediglich um eine quer zur Längsrichtung liegende Drehachse 76 schwenkbar angelenkt.

Die zweiten Hebel 60 sind jeweils drehbar um eine quer zur Längsrichtung liegende Drehachse 78 an dem Schlitten 56 angelenkt, der wiederum mit der Tragschiene 14 verbunden ist. Mit dem Teilrahmen 8 sind die zweiten Hebel 60 um die Drehachse 76 schwenkbar verbunden. Weder die ersten Hebel 58 noch die zweiten Hebel 60 sind damit relativ zum Teilrahmen 8 verschiebbar.

Der Schlitten 56 ist, wie bereits erwähnt wurde, mittels einer Längsführung 80, die an der Unterseite der Deckelplatte 68 angeordnet ist, in den Richtungen des Doppelpfeils 70 relativ zur Tragschiene 14 verschiebbar.

Eine Verschiebung des Schlittens 56 wird mittels einer Drehung der Gewindespindel 54 bewirkt, die an dem Schlitten 56 angreift und die mittels des Hubmotors 52 in Drehung versetzt wird. Der Hubmotor 52 ist mittels einer elastischen Wellenkupplung 84 mit der Gewindespindel 54 verbunden.

Wird die Gewindespindel 54 ausgehend von der in Fig. 7 dargestellten Stellung in Drehung versetzt, um den Schlitten 56 nach links zu verschieben, wird letztendlich die angehobene Stellung der Tragschiene 14 in Fig. 8 erreicht. Ein Abstand zwischen der Tragschiene 14 und dem Teilrahmen 8 ist nun vergrößert, so dass sich auch der Abstand der Oberseite der Tragschiene 14 zur Fahrbahn 16 vergrößert hat. Die Palette 18, siehe Fig. 1, wird dadurch angehoben, liegt auf der Oberseite der Tragschiene 14 auf und ist mit ihrer Unterseite von der Fahrbahn 16 abgehoben.

Wie an einem Vergleich der Fig. 7 und 8 zu erkennen ist, wird der Hubmechanismus 26 zusammen mit der Tragschiene 14 angehoben, lediglich die Drehachse 76 bzw. die zugehörigen Lager der ersten Hebel 58 und der zweiten Hebel 60 an dem Teilrahmen 8 verbleiben auf Höhe des Teilrahmens 8. Die Komponenten des Hubmechanismus 26 sind an der Deckelplatte 68 der Tragschiene 14 angeordnet. Speziell sind der Antriebsmotor 52, die Gewindespindel 54, die Führung 80 und der Schlitten 56 sowie auch der Lagerbock 72 an der Deckelplatte 68 angeordnet und werden dadurch gemeinsam mit der Tragschiene 14 angehoben. Dies hat den Vorteil, dass zum Ausbauen des Hubmechanismus 26 aus dem Transportwagen 10 lediglich die Verbindung der ersten Hebel 58 und der zweiten Hebel 60 mit dem Teilrahmen 8 gelöst werden muss und dann muss eine Verbindung zwischen der Deckelplatte 68 und der übrigen Tragschiene gelöst werden. Dann kann der gesamte Hubmechanismus 26 nach oben aus dem Transportwagen 10 herausgehoben werden.

Anhand eines Vergleichs der Fig. 7 und 8 ist weiter zu erkennen, dass beim Anheben der Tragschiene 14 diese ihre Position in Längsrichtung nicht verändert. Dies ist an der in Längsrichtung unveränderten Position der Drehachse 74 sowie auch des Antriebsmotors 52 zu erkennen, der an der Deckelplatte 68 befestigt ist. Stattdessen führt der Teilrahmen 8 eine Bewegung in Längsrichtung, in Fig. 8 nach links, aus. Dies ist daran zu erkennen, dass die Drehachse 76 ausgehend von der Fig. 7 in Fig. 8 nach links verschoben ist.

Anhand der Darstellung der Fig. 2 ist dadurch zu erkennen, dass der in Fig. 2 linke Teilrahmen 8A beim Anheben der Tragschiene 14 in Fig. 2 nach links verschoben würde. Der in Fig. 2 rechte Teilrahmen 8B würde dahingegen beim Anheben der Tragschiene nach rechts verschoben werden. Da die beiden Teilrahmen 8A, 8B nicht untereinander verbunden sind, ist eine solche Relativbewegung der beiden Teilrahmen 8A, 8B beim Anheben der Tragschiene 14 problemlos möglich.

Anhand der Fig. 7 und 8 ist zu erkennen, dass die Hubbewegung der Tragschiene 14 über eine Veränderung der Winkel der ersten Hebel 58 zu den zweiten Hebeln 60 bewirkt wird. Um hier günstige Hebelverhältnisse zu erreichen, ist nach Möglichkeit darauf zu achten, dass die Drehachse 74 und die Drehachse 78 möglichst nahe an der Oberseite der Tragschiene 14 angeordnet sind und dass die Drehachse 76 möglichst nahe an der Unterseite des Teilrahmens 8 angeordnet ist. Es ist dabei anhand der Fig. 7 und 8 festzustellen, dass weder in der abgesenkten Stellung der Fig. 7 noch in der angehobenen Stellung der Fig. 8 eine Totpunktstellung der ersten Hebel 58 zu den zweiten Hebeln 60 auftritt. Dadurch können die wirkenden Kräfte vergleichsweise gering gehalten werden und ein zuverlässiges Anheben und Absenken der Tragschiene 40 ist auch mit einer vergleichsweise geringen Antriebskraft des Antriebsmotors 52 zuverlässig möglich.

Die Darstellung der Fig. 9 zeigt den Hubmechanismus 26 in der abgesenkten Stellung der Fig. 7 von schräg unten. Zu erkennen ist die Anlenkung der zweiten Hebel 60 und der ersten Hebel 58 mittels einer Steckachse 84 an dem Teilrahmen 8A. Die Seitenplatten 61, 63 der Tragschiene 14 sind dabei mit verschließbaren und im abgesenkten Zustand der Fig. 9 mit der Steckachse 84 fluchtenden Öffnungen versehen. Im abgesenkten Zustand der Fig. 9 kann die Steckachse 84 dadurch seitlich aus dem Teilrahmen 8A herausgezogen werden. Wie beschrieben kann dann die Deckelplatte 68 zusammen mit dem vollständigen Hubmechanismus 26 nach oben aus dem Transportwagen 10 herausgezogen werden.

Die Darstellung der Fig. 10 zeigt den Hubmechanismus 26 im angehobenen Zustand gemäß Fig. 8. Der Schlitten 56 ist nun durch Drehung der Gewindespindel 54 nach links verschoben worden, wodurch der Winkel zwischen den ersten Hebeln 58 und den zweiten Hebeln 60 verringert wurde und die Tragschiene 14 nach oben gedrückt wurde. Zum Absenken der Tragschiene 14 muss die Gewindespindel 54 dann in der entgegengesetzten Richtung gedreht werden, um den Schlitten 56 wieder nach rechts, in Richtung des Antriebsmotors 52, zu bewegen.

Die Darstellung der Fig. 11 zeigt die Tragschiene 14 in einer auseinandergezogenen Darstellung. Speziell ist die Deckelplatte 68 mit einem Teil des Hubmechanismus 26 nach oben aus der Tragschiene 14 herausgezogen worden. In der Darstellung der Fig. 11 nicht dargestellt sind allerdings die ersten Hebel 58 und die zweiten Hebel 60, lediglich der Antriebsmotor 52, die elastische Wellenkupplung 84, der Schlitten 56, die Gewindespindel 54 und der Lagerbock 72 sind dargestellt.

Eine weitere Deckelplatte 90 ist im abgehobenen Zustand von der Tragschiene 14 dargestellt. Die Deckelplatte 90 kann an ihrer Unterseite mit den Steuereinheiten des Elektronikmoduls 36 versehen sein, vergleiche Fig. 3.

Die Tragschiene 14 weist die Seitenplatten 61 und 63 auf, wobei die Seitenplatten 61, 63 mittels Querstegen 62, 64, 66 miteinander verbunden sind. Die in Längsrichtung zwischen den Querstegen 62, 66 liegenden Zwischenräume werden, wie bereits erörtert wurde, durch die Deckelplatten 68, 90 verschlossen. In der in Fig. 11 und 12 linken Hälfte der Tragschiene 14 sind die Deckelplatten 68, 90 der Übersichtlichkeit halber nicht dargestellt. Die Deckelplatten 68, 90 werden mittels Schrauben an den Seitenplatten 61, 63 befestigt. Am Beispiel der Deckelplatte 68 muss diese Verbindung äußerst belastbar ausgeführt werden, da sich der Hubmechanismus ja an der Deckelplatte 68 abstützt und somit ein erheblicher Anteil der Hubkraft, mit der die gegebenenfalls beladenen Paletten angehoben werden, über die Verbindung zwischen der Deckelplatte 68 und den Seitenplatten 61, 63 übertragen werden muss.

In der Darstellung der Fig. 14 ist die Tragschiene 14 in einer Vorderansicht dargestellt. Es ist zu erkennen, dass die in Fig. 14 rechte Seitenplatte 61 geringfügig kürzer als die linke Seitenplatte 63 ausgeführt ist. Die Unterkante der rechten Seitenplatte 61 liegt dadurch auch im abgesenkten Zustand etwas höher über der Fahrbahn 16 als die Unterkante der linken Seitenplatte 63, um dadurch Platz für das Kabel 20 zu schaffen, siehe Fig. 1 und Fig. 5.

In den Darstellungen der Fig. 15, 16 und 17 ist der Lenkmechanismus 24 dargestellt. In Fig. 15 sind die beiden Rollen 46, 48 zu erkennen, die jeweils als Schwerlastrollen ausgeführt sind und die auf einer gemeinsamen, durchgehenden Starrachse 92 drehbar gelagert sind. Die Starrachse 92 ist mit einem senkrecht zu ihrer Längsrichtung abragenden Lenkzapfen 50 versehen. Der Lenkzapfen ist in dem Teilrahmen 8 um die Drehachse 50 drehbar gelagert. Dadurch kann eine Winkelstellung der Starrachse 92 relativ zu einer Längsrichtung des Transportwagens 10 geändert werden, wodurch der Transportwagen 10 gelenkt werden kann.

Die Starrachse 92 ist weiter mit dem Lenkhebel 52 verbunden, der an seinem freien Ende mit einem Langloch 94 versehen ist, siehe auch Fig. 17. In das Langloch 94 greift ein Antriebszapfen 96 eines Lenkmotors 98 ein. Der Lenkmotor 98 ist selbst auf einer Gewindespindel 100 angeordnet, die sich quer zur Längsrichtung des Transportwagens 10 erstreckt. Wird der Lenkmotor 98 in Drehung versetzt, so verschiebt sich dieser gemeinsam mit dem Antriebszapfen 96 quer zur Längsrichtung, in der Darstellung der Fig. 17 also nach unten oder oben. Dadurch wird gleichzeitig der Lenkhebel 52 ausgelenkt und die Starrachse 92 wird in ihrem Winkel zur Längsachse des Transportwagens 10 verändert, wie in Fig. 17 durch einen gekrümmten Doppelpfeil 102 angedeutet ist.

Realisiert ist bei dem erfindungsgemäßen Transportwagen 10 dadurch eine im Aufbau äußerst simple Drehschemellenkung, die aber hochbelastbar ist und die für die Lenkkorrekturen, die beim Bewegen des Transportwagens 10 ausgeführt werden müssen, völlig ausreichend ist.

Bei dem erfindungsgemäßen Transportwagen 10 wird demgemäß ein modularer Aufbau realisiert. Durch die Verwendung zweier relativ zueinander beweglicher Teilrahmen kann der Hubmechanismus einfach gehalten werden. Da die beiden Teilrahmen zueinander beweglich sind, muss nicht zwingend eine Parallelogrammanordnung der Hebel des Hubmechanismus erreicht werden. Dies macht die Verwendung zweier im Wesentlichen identisch aufgebauter Hubmodule und zweier im Wesentlichen identischer Teilrahmen möglich.

## Patentansprüche

1. Selbstfahrender Transportwagen (10) für Paletten (18), wobei der Transportwagen (10) wenigstens einen Fahrantrieb (22), einen Rahmen, eine Tragschiene (14) und wenigstens einen Hubmechanismus (26) zum Anheben und Absenken der Tragschiene (14) relativ zu dem Rahmen aufweist, wobei der Transportwagen (10) ausgebildet ist, eine zur Fahrbahn (16) hin offene Durchgangsöffnung zwischen einer auf der Fahrbahn (16) stehenden Palette (18) und der Fahrbahn (16) in zwei entgegengesetzten Richtungen vollständig zu durchfahren, wobei der Rahmen zwei in Längsrichtung des Transportwagens (10) relativ zueinander bewegliche Teilrahmen (8A, 8B) aufweist, die jeweils mit wenigstens zwei Rollen (40, 46, 48), einem Fahrantrieb (22) für wenigstens eine der Rollen (40, 46, 48) und einem Hubmechanismus (26) versehen sind und jeder Hubmechanismus (26) wenigstens einen ersten (58) und einen zweiten Hebel (60) aufweist, wobei
- der erste Hebel (58) einerseits um eine quer zur Längsachse (6) des Transportwagens (10) liegende Drehachse (76) schwenkbar aber nicht parallel zur Längsachse (6) verschiebbar an dem Teilrahmen (8A, 8B) und andererseits um eine quer zur Längsachse (6) liegende Drehachse (74) schwenkbar aber nicht parallel zur Längsachse (6) verschiebbar an der Tragschiene (14) angeordnet ist,
- der zweite Hebel (60) einerseits um eine quer zur Längsachse (6) liegende Drehachse (78) schwenkbar und parallel zur Längsachse (6) verschiebbar an der Tragschiene (14) beziehungsweise an dem Teilrahmen angeordnet ist, **dadurch gekennzeichnet, dass** der zweite Hebel (60) andererseits um eine quer zur Längsachse (6) des Transportwagens (10) liegende Drehachse (76) schwenkbar aber nicht parallel zur Längsachse (6) verschiebbar an dem Teilrahmen (8A, 8B) oder an der Tragschiene (14).

2. Selbstfahrender Transportwagen (10) nach Anspruch 1, **dadurch gekennzeichnet, dass** die Teilrahmen (8A, 8B) symmetrisch zu einer senkrecht zur Längsachse (6) des Transportwagens (10) angeordneten Quermittelebene (12) angeordnet sind.

3. Selbstfahrender Transportwagen (10) nach Anspruch 1 oder 2, **dadurch gekennzeichnet, dass** ein Antrieb des Hubmechanismus (26) an der Tragschiene (14) angeordnet ist und an dem zweiten Hebel (60) angreift.

4. Selbstfahrender Transportwagen (10) nach Anspruch 3, **dadurch gekennzeichnet, dass** der Antrieb des Hubmechanismus (26) im Bereich der verschiebbaren Lagerung des zweiten Hebels (60) an der Tragschiene (14) an diesem angreift und eine Verschiebung des an der Tragschiene (14) gelagerten Endes des zweiten Hebels (60) in und entgegen der Längsachse (6) bewirkt.

5. Selbstfahrender Transportwagen (10) nach einem der vorstehenden Ansprüche, **dadurch gekennzeichnet, dass** der zweite Hebel (60) an der Tragschiene (14) mittels eines parallel zur Längsachse (6) der Tragschiene (14) verschiebbaren Schlittens (56) befestigt ist.

6. Selbstfahrender Transportwagen (10) nach Anspruch 5, **dadurch gekennzeichnet, dass** der Schlitten (56) mittels einer Gewindespindel (54) antreibbar ist.

7. Selbstfahrender Transportwagen (10) nach Anspruch 6, **dadurch gekennzeichnet, dass** der Schlitten (56) eine Gewindebohrung aufweist, in der die Gewindespindel (54) abschnittsweise aufgenommen ist.

8. Selbstfahrender Transportwagen (10) nach Anspruch 6 oder 7, **dadurch gekennzeichnet, dass** die Gewindespindel (54) parallel zur Längsachse (6) des Transportwagens (10) angeordnet ist.

9. Selbstfahrender Transportwagen (10) nach einem der vorstehenden Ansprüche, **dadurch gekennzeichnet, dass** die Lagerung des ersten Hebels (58) an der Tragschiene (14), die Lagerung des zweiten Hebels (60) an der Tragschiene (14) und ein Antrieb für den Hubmechanismus (26) an einem Hubmodulabschnitt der Tragschiene (14) befestigt sind, wobei der Hubmodulabschnitt als separates Bauteil ausgebildet ist und von der übrigen Tragschiene (14) getrennt werden kann.

10. Selbstfahrender Transportwagen (10) nach Anspruch 9, **dadurch gekennzeichnet, dass** der Hubmodulabschnitt der Tragschiene (14) als Deckelplatte (68) ausgebildet und lösbar mit der übrigen Tragschiene (14) verbunden ist.

11. Selbstfahrender Transportwagen (10) nach Anspruch 10, **dadurch gekennzeichnet, dass** die Deckelplatte (68) an einer Oberseite der Tragschiene (14) angeordnet ist und dass Mittel zum Verbinden von Tragschiene (14) und Deckelplatte (68) von einer Oberseite der Tragschiene (14) oder von den Seiten der Tragschiene (14) her zugänglich und lösbar sind.

12. Selbstfahrender Transportwagen (10) nach einem der vorstehenden Ansprüche, **dadurch gekennzeichnet, dass** jeder Teilrahmen (8A, 8B) eine Lenkachse (24) und einen Lenkantrieb aufweist.

13. Selbstfahrender Transportwagen (10) nach einem der vorstehenden Ansprüche, **dadurch gekennzeichnet, dass** jeder Teilrahmen (8A, 8B) einen Fahrantrieb (22) aufweist.

## Claims

1. Self-propelled transport trolley (10) for pallets (18), wherein the transport trolley (10) has at least one traction drive (22), a frame, a support rail (14) and at least one lift mechanism (26) for raising and lowering the support rail (14) relative to the frame, wherein the transport trolley (10) is configured to completely run through a passage, which is open towards a track (16), between a pallet (18) standing on the track (16) and the track (16) in two opposite directions, wherein the frame includes two partial frames (8A, 8B) displaceable relatively to each other in the longitudinal direction of the transport trolley (10), each partial frame is provided with at least two rollers (40, 46, 48), a traction drive (22) for at least one of the rollers (40, 46, 48) and a lift mechanism (26), and each lift mechanism (26) includes at least one first (58) and one second lever (60), wherein
- the first lever (58) is mounted on the one hand side on the partial frame (8A, 8B) to be pivotable about an axis of rotation (76) located transversely to the longitudinal axis (6) of the transport trolley (10) but not displaceable parallel to the longitudinal axis (6), and on the other hand side on the support rail (14) to be pivotable about an axis of rotation (74) located transversely to the longitudinal axis (6) but not displaceable parallel to the longitudinal axis (6),
- the second lever (60) is mounted on the one hand side on the support rail (14) and the partial frame, respectively, to be pivotable about an axis of rotation (78) located transversely to the longitudinal axis (6) and displaceable parallel to the longitudinal axis (6), **characterized in that** the second lever (60) is mounted on the one hand side on the partial frame (8A, 8B) or on the support rail (14) to be pivotable about an axis of rotation (76) located transversely to the longitudinal axis (6) of the transport trolley (10) but not displaceable parallel to the longitudinal axis (6).

2. Self-propelled transport trolley (10) according to claim 1, **characterized in that** the partial frames (8A, 8B) are disposed symmetrically to a transverse center plane (12) which is located perpendicular to the longitudinal axis (6) of the transport trolley (10).

3. Self-propelled transport trolley (10) according to claim 1 or 2, **characterized in that** a drive of the lift mechanism (26) is disposed on the support rail (14) and engages on the second lever (60).

4. Self-propelled transport trolley (10) according to claim 3, **characterized in that** the drive of the lift mechanism (26) engages on the second lever (60) in the region of the displaceable mounting of said second lever on the support rail (14) and causes displacement of the end of the second lever (60) mounted on the support rail (14) in and opposite to the longitudinal axis (6).

5. Self-propelled transport trolley (10) according to any one of the preceding claims, **characterized in that** the second lever (60) is fixed to the support rail (14) by means of a carriage (56) which is displaceable parallel to the longitudinal axis (6) of the support rail (14).

6. Self-propelled transport trolley (10) according to claim 5, **characterized in that** the carriage (56) is drivable by means of a threaded spindle (54).

7. Self-propelled transport trolley (10) according to claim 6, **characterized in that** the carriage (56) has a threaded hole in which the threaded spindle (54) is received in sections.

8. Self-propelled transport trolley (10) according to claim 6 or 7, **characterized in that** the threaded spindle (54) is disposed parallel to the longitudinal axis (6) of the transport trolley (10).

9. Self-propelled transport trolley (10) according to any one of the preceding claims, **characterized in that** the mounting of the first lever (58) on the support rail (14), the mounting of the second lever (60) on the support rail (14) and a drive for the lift mechanism (26) are fixed on a lift module section of the support rail (14), wherein the lift module section is a separate component and can be separated from the rest of the support rail (14).

10. Self-propelled transport trolley (10) according to claim 9, **characterized in that** the lift module section of the support rail (14) is a cover plate (68) and is connected releasably to the rest of the support rail (14).

11. Self-propelled transport trolley (10) according to claim 10, **characterized in that** the cover plate (68) is disposed on a top surface of the support rail (14) and **in that** means for connecting of support rail (14) and cover plate (68) are accessible and releasable from a top surface of the support rail (14) or from the sides of the support rail (14).

12. Self-propelled transport trolley (10) according to any one of the preceding claims, **characterized in that** each partial frame (8A, 8B) has a steering axle (24) and a steering drive.

13. Self-propelled transport trolley (10) according to any one of the preceding claims, **characterized in that** each partial frame (8A, 8B) has a traction drive (22).

## Revendications

1. Chariot de transport automoteur (10) pour palettes (18), le chariot de transport (10) présentant au moins un entraînement de conduite (22), un châssis, un rail porteur (14) et au moins un mécanisme de levage (26) pour lever et abaisser le rail porteur (14) par rapport au châssis, le chariot de transport (10) étant réalisé de manière à passer complètement dans deux directions opposées à travers une ouverture de passage ouverte vers la voie de circulation (16) entre une palette (18) posée sur la voie de circulation (16) et la voie de circulation (16), le châssis présentant deux châssis partiels (8A, 8B) déplaçables l'un par rapport à l'autre dans la direction longitudinale du chariot de transport (10), lesquels sont pourvus chacun d'au moins deux rouleaux (40, 46, 48), d'un entraînement de conduite (22) pour au moins l'un des rouleaux (40, 46, 48) et d'un mécanisme de levage (26), et chaque mécanisme de levage (26) présentant au moins un premier (58) et un deuxième (60) levier;
- le premier levier (58) étant disposé sur le châssis partiel (8A, 8B) d'une part de manière à pouvoir pivoter autour d'un axe de rotation (76) situé transversalement par rapport à l'axe longitudinal (6) du chariot de transport (10) mais sans pouvoir être déplacé parallèlement à l'axe longitudinal (6) et sur le rail porteur (14) d'autre part de manière à pouvoir pivoter autour d'un axe de rotation (74) situé transversalement par rapport à l'axe longitudinal (6) mais sans pouvoir être déplacé parallèlement à l'axe longitudinal (6),
- le deuxième levier (60) étant disposé sur le rail porteur (14), respectivement sur le châssis partiel, d'une part de manière à pouvoir pivoter autour d'un axe de rotation (78) situé transversalement à l'axe longitudinal (6) et de manière à pouvoir être déplacé parallèlement à l'axe longitudinal (6), **caractérisé en ce que** le deuxième levier (60) est disposé d'autre part sur le châssis partiel (8A, 8B) ou sur le rail porteur (14) de manière à pouvoir pivoter autour d'un axe de rotation (76) situé transversalement à l'axe longitudinal (6) du chariot de transport (10) mais sans pouvoir être déplacé parallèlement à l'axe longitudinal (6).

2. Chariot de transport automoteur (10) selon la revendication 1, **caractérisé en ce que** les châssis partiels (8A, 8B) sont disposés de manière symétrique par rapport à un plan médian transversal (12) disposé perpendiculairement à l'axe longitudinal (6) du chariot de transport (10).

3. Chariot de transport automoteur (10) selon la revendication 1 ou 2, **caractérisé en ce qu'**un entraînement du mécanisme de levage (26) est disposé sur le rail porteur (14) et vient en prise avec le deuxième levier (60).

4. Chariot de transport automoteur (10) selon la revendication 3, **caractérisé en ce que** l'entraînement du mécanisme de levage (26) vient en prise avec le rail porteur (14) dans la région du support déplaçable du deuxième levier (60) sur le rail porteur et provoque un déplacement de l'extrémité du deuxième levier (60) supportée sur le rail porteur (14) dans la direction de l'axe longitudinal (6) et dans la direction opposée.

5. Chariot de transport automoteur (10) selon l'une quelconque des revendications précédentes, **caractérisé en ce que** le deuxième levier (60) est fixé au niveau du rail porteur (14) au moyen d'un chariot (56) déplaçable parallèlement à l'axe longitudinal (6) du rail porteur (14).

6. Chariot de transport automoteur (10) selon la revendication 5, **caractérisé en ce que** le chariot (56) peut être entraîné au moyen d'une broche filetée (54).

7. Chariot de transport automoteur (10) selon la revendication 6, **caractérisé en ce que** le chariot (56) présente un alésage fileté dans lequel la broche filetée (54) est partiellement reçue.

8. Chariot de transport automoteur (10) selon la revendication 6 ou 7, **caractérisé en ce que** la broche filetée (54) est disposée parallèlement à l'axe longitudinal (6) du chariot de transport (10).

9. Chariot de transport automoteur (10) selon l'une quelconque des revendications précédentes, **caractérisé en ce que** le support du premier levier (58) sur le rail porteur (14), le support du deuxième levier (60) sur le rail porteur (14) et un entraînement pour le mécanisme de levage (26) sont fixés au niveau d'une portion de module de levage du rail porteur (14), la portion de module de levage étant réalisée sous forme de composant séparé et pouvant être séparée du reste du rail porteur (14).

10. Chariot de transport automoteur (10) selon la revendication 9, **caractérisé en ce que** la portion de module de levage du rail porteur (14) est réalisée sous forme de plaque de couvercle (68) et est connectée de manière détachable au reste du rail porteur (14).

11. Chariot de transport automoteur (10) selon la revendication 10, **caractérisé en ce que** la plaque de couvercle (68) est disposée au niveau d'un côté supérieur du rail porteur (14) et **en ce que** des moyens pour raccorder le rail porteur (14) et la plaque de couvercle (68) sont accessibles depuis un côté supérieur du rail porteur (14) ou depuis les côtés du rail porteur (14) et sont détachables.

12. Chariot de transport automoteur (10) selon l'une quelconque des revendications précédentes, **caractérisé en ce que** chaque châssis partiel (8A, 8B) présente un axe de direction (24) et un entraînement de direction.

13. Chariot de transport automoteur (10) selon l'une quelconque des revendications précédentes, **caractérisé en ce que** chaque châssis partiel (8A, 8B) présente un entraînement de conduite (22).
